# FASCICULE DE BREVET EUROPEEN

(11) **EP 3 093 069 B1**
(45) Date de publication et mention de la délivrance du brevet: **04.07.2018**
(21) Numéro de dépôt: 16168306.5
(22) Date de dépôt: 04.05.2016
(51) Int. Cl.: B01F 15/00, B01F 13/00, A47J 43/044, A47J 43/08, F03G 1/08, F03G 1/02, A47J 43/07, B65D 47/26

(54) **APPAREIL POUR ÉMULSIONNER**
GERÄT ZUM HERSTELLEN VON EMULSIONEN
EMULSIFYING APPARATUS

(30) Priorité: 07.05.2015 FR 1554155
(43) Date de publication de la demande: 16.11.2016
(73) Titulaire: KARIS, 75009 Paris (FR)
(72) Inventeur: BHAGAT, Amaury, 36000 Châteauroux (FR)
(74) Mandataire: Gendron, Vincent Christian

(56) Documents cités:
- DE-A1- 1 939 202
- DE-A1- 2 149 804
- DE-U1- 20 118 188
- FR-A- 1 147 835
- US-A- 39 532
- US-A- 1 421 932
- US-A- 1 742 878
- US-A- 2 007 361
- US-A- 4 190 173
- US-A- 5 201 263
- US-A- 5 497 695
- US-B1- 6 224 253

## Description

L'invention concerne le domaine des ustensiles pour préparations culinaires. Elle concerne plus particulièrement un appareil pour émulsionner ou mélanger une préparation alimentaire fluide telle que, par exemple mais non exclusivement, une sauce, notamment vinaigrette, et du type comportant un récipient équipé d'un couvercle amovible comprenant un outil rotatif plongeant dans le récipient pour émulsionner la préparation et un dispositif d'actionnement mécanique pour l'entraînement en rotation de l'outil rotatif.

Un tel appareil, encore connu sous le nom d'émulsionneur à sauces, est bien connu de l'homme du métier, notamment par l'exemple qu'en donne le produit commercialisé sous la marque Emulstir®. Cet émulsionneur se présente sous la forme d'un récipient en acrylique alimentaire surmonté d'un couvercle amovible pourvu d'un mécanisme destiné à être actionné manuellement par une poignée extérieure pour entraîner en rotation une hélice monté sur le couvercle et plongeant à l'intérieur du récipient permettant un mélange de la sauce dans le récipient. Le mécanisme d'entraînement comporte un moyen à levier pivotant entre une première et une deuxième position, de telle sorte que le mouvement du moyen à levier entre la première et la deuxième position entraîne la rotation de l'hélice, tandis que des moyens à ressort permettent de solliciter le moyen à levier pivotant vers la première position. La poignée extérieure utilisée pour actionner le mécanisme d'entraînement de l'hélice se présente sous la forme d'une poignée de levier en extension permettant d'actionner manuellement le moyen à levier pivotant vers la deuxième position en s'opposant à la force exercée par les moyens à ressort. Aussi, cette opération d'actionnement manuel est-elle relativement fastidieuse et inconfortable pour l'utilisateur.

Le document de brevet US1,742,878 décrivant un appareil selon le préambule de la revendication 1, fait connaître un appareil mélangeur pour des liquides comprenant un récipient fermé par un couvercle amovible dans lequel est logé un moteur à ressort armable et déclenchable, servant à entraîner en rotation un outil rotatif lié au couvercle et plongeant dans le récipient. Cependant, cet appareil nécessite de retirer le couvercle du récipient pour pouvoir vider le récipient de son contenu, ce qui est peu ergonomique. Le document FR 1 147 835 fait également connaître un appareil à mélanger présentant un couvercle creux susceptible d'être posé de façon amovible sur un récipient et renfermant un moteur à ressort pour entraîner en rotation un outil mélangeur. Le couvercle comporte une partie incurvée pour ne pas fermer complètement l'orifice du récipient lorsqu'il est posé sur ce dernier et réserver ainsi une ouverture à travers laquelle le récipient peut être vidé de son contenu. Toutefois, une telle ouverture favorise d'éventuelles projections hors du récipient à travers elle au cours de l'opération de mélange, en particulier de liquides, ce qui n'est pas souhaitable. En outre, dans le domaine culinaire, il peut être intéressant de disposer d'un débit de versement variable de la préparation alimentaire qui a été mélangée dans l'appareil, pour autoriser une meilleure précision du dosage de la quantité versée, ce que ne permet pas l'ouverture précitée.

Aussi, il existe un besoin pour un appareil pour émulsionner une préparation alimentaire fluide, permettant de mélanger rapidement et aisément une telle préparation dans un récipient pourvu d'un couvercle amovible, tout en permettant de vider aisément le récipient de son contenu avec le couvercle restant posé sur lui sans les inconvénients précédemment évoqués et en autorisant un débit de versement variable.

A cette fin, l'invention concerne un appareil pour émulsionner une préparation alimentaire fluide comprenant un récipient équipé d'un couvercle amovible comprenant un outil rotatif plongeant dans le récipient pour émulsionner la préparation et un dispositif d'actionnement mécanique pour l'entraînement en rotation de l'outil rotatif, le dispositif d'actionnement mécanique comprenant un organe d'entraînement relié mécaniquement à l'outil rotatif et qui agit sur l'outil rotatif par l'intermédiaire d'un dispositif de déclenchement à accumulation d'énergie potentielle comprenant des moyens élastiques propres à stocker de l'énergie potentielle, lors d'une phase d'armement du dispositif de déclenchement à accumulation d'énergie potentielle, et à la restituer à l'organe d'entraînement pour entraîner l'outil rotatif en rotation, lors d'une phase de déclenchement du dispositif de déclenchement à accumulation d'énergie potentielle, ledit appareil étant caractérisé en ce que le récipient est muni d'un bec verseur et en ce que le couvercle comprend une partie inférieure par laquelle il est monté sur le récipient et dans laquelle est ménagé un canal de distribution venant en regard du bec verseur lorsque le couvercle est monté sur le récipient, le couvercle comportant un disque monté mobile à rotation sous la partie inférieure du couvercle de sorte à s'interposer entre un volume sous-jacent du récipient et ledit canal de distribution, ledit disque comprenant des secteurs angulaires aptes à être amenés respectivement en regard dudit canal de distribution par la rotation dudit disque pour réguler le débit de versement vers ledit bec verseur suivant au moins trois positions respectivement ouverte, filtrée et fermée, ledit couvercle comportant une molette de réglage du disque dans l'une desdites trois positions.

Selon d'autres caractéristiques avantageuses de l'appareil conforme à l'invention, prises isolément ou en combinaison :
- le bec verseur présente une ouverture débouchant à l'intérieur du récipient et la partie inférieure du couvercle présente une portion cylindrique engagée à l'intérieur du récipient à travers laquelle est ménagée une encoche périphérique radiale s'étendant en regard de ladite ouverture et formant ledit canal de distribution ;
- le disque comprend un premier secteur angulaire constitué d'une échancrure formant un secteur complètement ajouré apte à autoriser un débit de versement maximal vers le bec verseur, un deuxième secteur angulaire, constitué d'une partie pleine régulièrement trouée du disque, formant un secteur partiellement ajouré, apte à autoriser un débit de versement inférieur par rapport au débit de versement maximal et un troisième secteur angulaire constitué d'une partie pleine du disque, formant un secteur plein, apte à obturer le passage vers le bec verseur ;
- le dispositif de déclenchement à accumulation d'énergie potentielle comprend un moyen de chargement incrémental des moyens élastiques ;
- l'organe d'entraînement comprend des moyens d'accouplement débrayables propres à bloquer en rotation l'organe d'entraînement ;
- l'organe d'entraînement est déplaçable axialement entre sa position de blocage et une position de libération dans laquelle les moyens d'accouplement débrayables sont débrayés ;
- les moyens d'accouplement débrayables coopèrent avec des moyens de rappel élastique de l'organe d'entraînement dans sa position de blocage ;
- le dispositif de déclenchement à accumulation d'énergie potentielle comprend un organe de commande manuelle pour engendrer la phase de déclenchement, l'organe de commande manuelle étant monté en liaison avec une extrémité de l'organe d'entraînement, de sorte qu'une action exercée sur l'organe de commande manuelle est apte à débrayer les moyens d'accouplement débrayables de l'organe d'entraînement provoquant la libération des moyens élastiques ;
- le dispositif de déclenchement à accumulation d'énergie potentielle comprend un organe d'armement comprenant une première et une deuxième parties coaxiales montées mobiles en rotation l'une par rapport à l'autre, la deuxième partie étant en prise avec l'organe d'entraînement ;
- les moyens élastiques comportent au moins un ressort spirale agencé entre les deux parties de l'organe d'armement, dont les extrémités respectives sont montées fixes sur chacune des parties de l'organe d'armement ;
- les moyens élastiques sont susceptibles d'être armés lors de la phase d'armement par la rotation de la première partie de l'organe d'armement dans une direction d'armement, tandis que la première partie de l'organe d'armement coopère avec une roue dentée fixe pour prévenir la rotation de la première partie de l'organe d'armement dans une direction opposée à la direction d'armement ;
- l'organe d'entraînement comprend une extrémité de couplage reliée à l'outil rotatif par l'intermédiaire d'un moyen de démultiplication ;
- le moyen de démultiplication se compose d'un train d'engrenages en prise d'une part, avec un pignon en liaison avec l'outil rotatif et, d'autre part, avec un pignon en liaison avec l'extrémité de couplage de l'organe d'entraînement.

D'autres caractéristiques et avantages de l'invention ressortiront clairement de la description qui en est faite ci-après d'un mode de réalisation particulier de l'invention présenté à titre indicatif et nullement limitatif, en référence aux dessins annexés, dans lesquels:
- la Figure 1 est une vue en perspective éclatée de l'appareil selon l'invention;

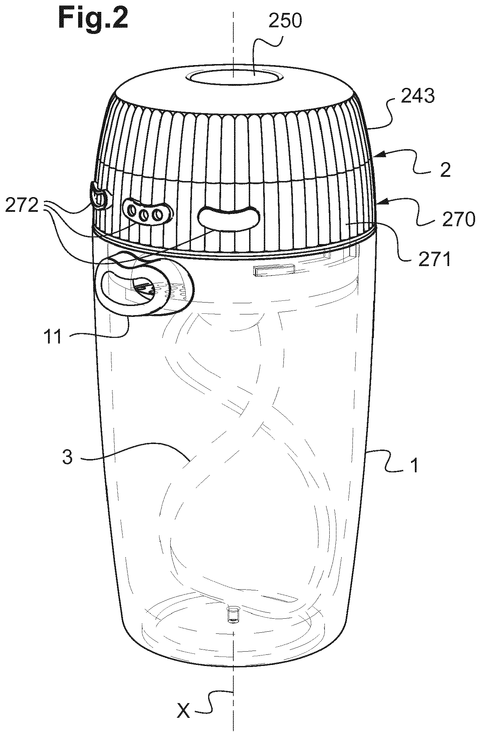

- la Figure 2 est une vue en perspective de l'appareil selon l'invention, en vue non éclatée.

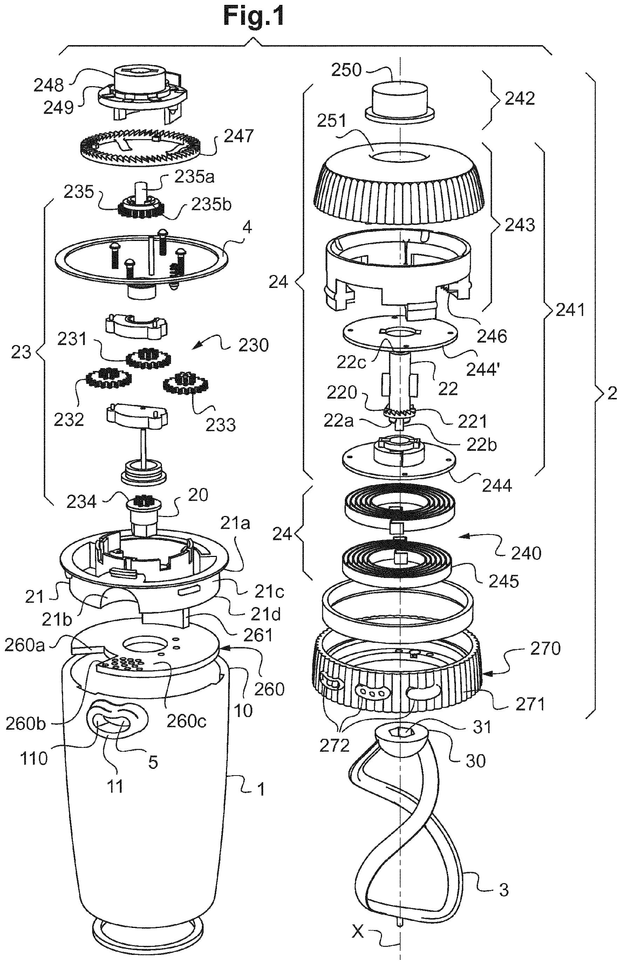

Comme le montre la figure 1, un appareil selon l'invention pour émulsionner une préparation alimentaire fluide telle qu'une vinaigrette, comprend un récipient 1, de forme générale cylindrique, dans lequel la préparation peut être émulsionnée. Le récipient 1 comprend un couvercle 2 de forme sensiblement cylindrique de révolution d'axe X, confondu avec l'axe du récipient, destiné à être adapté de manière amovible sur le col 10 du récipient 1, préférentiellement par l'intermédiaire d'un joint 4, par exemple au moyen d'ergots et d'encoches qui coopèrent pour déterminer une position de blocage du couvercle 2 sur le récipient 1. Le couvercle 2 porte un outil rotatif 3 allongé qui est destiné à plonger à l'intérieur du récipient 1 et qui est conformé pour émulsionner la préparation. Il présente par exemple la forme d'une hélice refermée sur elle-même. L'hélice comporte un bord d'attaque affiné sur son côté avant (par rapport au sens de rotation), permettant de favoriser la pénétration de l'outil dans la préparation à émulsionner lors de sa mise en rotation. L'outil rotatif 3 est lié, au niveau d'une extrémité 30, au couvercle 2, par des moyens de guidage en rotation 31 coaxial à l'axe longitudinal de l'outil, confondu avec l'axe X, et solidaires d'une tête d'accouplement 20 disposée au niveau d'une partie inférieure 21 du couvercle 2. Selon l'exemple illustré, le joint 4 est interposé entre le col 10 du récipient 1 et une bordure périphérique radiale 21a de la partie inférieure 21 du couvercle 2, destinée à reposer sur le col 10 du récipient 1.

Le récipient 1 est en outre muni d'un bec verseur 11 disposé en partie haute du récipient sensiblement à proximité du col 10 du récipient 1. Le bec verseur 11 fait saillie vers l'extérieur sous le col du récipient. Il présente un passage de versement 110 qui s'étend sensiblement perpendiculairement à l'axe du récipient, depuis une extrémité amont associée à une ouverture 5 dans une paroi cylindrique interne du récipient qui débouche à l'intérieur du récipient, en amont du bec verseur 11, vers une extrémité aval ouverte en communication directe avec l'extérieur du récipient.

La partie inférieure 21 du couvercle 2 destinée à être montée sur le col 10 du récipient 1, comporte une portion cylindrique délimitée par une paroi cylindrique inférieure 21c s'étendant entre la bordure périphérique radiale 21a et une paroi circulaire inférieure 21d de la partie inférieure 21 du couvercle formant le fond du couvercle, la paroi cylindrique inférieure 21c étant destinée à coopérer avec la paroi cylindrique interne du récipient 1, de façon à définir la position de blocage du couvercle sur le récipient, par exemple au moyens d'ergots agencés sur la paroi cylindrique inférieure 21c et d'encoches correspondantes ménagées sur la paroi cylindrique interne du récipient.

La portion cylindrique de la partie inférieure 21 du couvercle est munie d'une encoche périphérique radiale 21b, s'étendant sensiblement en direction de l'axe X depuis la paroi cylindrique inférieure 21a et destinée à venir en regard du bec verseur 11 lorsque le couvercle 2 est monté sur le récipient 1, formant ainsi un canal de distribution vers le bec verseur à travers la portion cylindrique de la partie inférieure 21 du couvercle engagée à l'intérieur du récipient. Autrement dit, lorsque le couvercle 2 est monté sur le récipient 1 en position de blocage, l'encoche périphérique radiale 21b pratiquée dans la portion cylindrique de la partie inférieure 21 du couvercle 2, vient en regard de l'ouverture associée à l'extrémité amont du passage de versement 110 du bec verseur 11.

Le couvercle 2 comprend en outre des moyens 260 de régulation du débit de versement. Ces moyens de régulation du débit se présentent sous la forme d'un disque 260 sous-jacent à la portion cylindrique de la partie inférieure 21 du couvercle, monté mobile à rotation autour de l'axe X. Autrement dit, le disque 260 monté mobile à rotation est disposé en prolongement de la paroi cylindrique inférieure de la partie inférieure 21 du couvercle 2, de sorte à s'interposer entre un volume sous-jacent du récipient 1 et le canal de distribution 21b vers le bec verseur 11. Autrement dit encore, le disque 260 est disposé à l'opposé de la bordure périphérique radiale 21a par laquelle le couvercle repose sur le col récipient, par rapport à la portion cylindrique de la partie inférieure 21 du couvercle. Il est disposé dans un plan perpendiculaire à l'axe X affleurant sensiblement au niveau de l'ouverture 5 associée à l'extrémité amont du passage de versement du bec verseur 11 et permet donc de séparer le volume du récipient situé sous ce plan du volume délimité par le canal de distribution 21b s'étendant dans la portion cylindrique de la partie inférieure 21 du couvercle en regard de l'ouverture 5 associée à l'extrémité amont du passage de versement du bec verseur 11.

Le disque 260 comporte au moins trois secteurs angulaires 260a, 260b, 260c, aptes à venir respectivement en regard du canal de distribution 21b sous l'effet de la rotation du disque 260, pour réguler le débit vers le bec verseur. Par exemple, un premier secteur angulaire 260a constitué par exemple d'une échancrure dans le disque 260, forme un secteur complètement ajouré, correspondant à une position de réglage dite ouverte vers le bec verseur lorsqu'il est amené en regard du canal de distribution par rotation du disque 260, autorisant un débit de versement maximal vers le bec verseur. Un deuxième secteur angulaire 260b, constitué d'une partie pleine régulièrement trouée du disque, forme un secteur partiellement ajouré, correspondant à une position de réglage dite filtrée vers le bec verseur lorsqu'il est amené en regard du canal de distribution par rotation du disque 260, générant un débit de versement inférieur par rapport au débit de versement maximal. Ce débit de versement inférieur pourra être avantageusement adapté en fonction du nombre et/ou de la taille des trous pratiqués dans le secteur angulaire correspondant. On pourra ainsi envisager plusieurs secteurs angulaires distincts tels que le deuxième secteur angulaire dans le disque, pour adapter plusieurs positions filtrées avec des débits de versement différenciés pour chacune d'elles, en fonction de la configuration partiellement ajourée des secteurs angulaires correspondant. Un troisième secteur angulaire 260c constitué d'une partie pleine du disque, forme un secteur plein, correspondant à une position de réglage dite fermée, obturant le passage vers le bec verseur lorsqu'il est amené en regard du canal de distribution par rotation du disque 260. Ainsi, la mise en correspondance des secteurs angulaires respectifs 260a, 260b et 260c du disque 260 avec le canal de distribution 21b vers le bec verseur permet d'autoriser ou non le versement et lorsqu'il est autorisé, permet de réguler le débit de versement parmi au moins un débit de versement maximal (position ouverte) et un débit de versement inférieur (position filtrée), autorisant ainsi une meilleure précision du versement.

Le couvercle 2 de l'appareil comporte en outre une molette de réglage 270, montée solidaire du disque 260 et apte à amener le disque 260 dans l'une des trois positions ouverte, filtrée ou fermée, par rotation de la molette de réglage. La molette de réglage 270 est constituée par un anneau cylindrique monté mobile en rotation au-dessus de la partie inférieure du couvercle, et lié au disque 260 par l'intermédiaire d'une patte de fixation 261 faisant saillie du disque 260 vers le haut à travers la partie inférieure 21 du couvercle. La surface cylindrique externe 271 de la molette de réglage 270 constitue une partie de la surface cylindrique externe du couvercle. La surface cylindrique externe de la molette de réglage 270 comporte avantageusement des repères de réglage 272 pour chacune des positions de réglage respectives du débit de versement (ouverte, filtrée, fermée). Chaque repère de réglage porte un symbole représentatif de la position de réglage correspondante. Ils sont positionnés sur la surface cylindrique externe 271 de la molette de réglage, de sorte que la mise en regard d'un repère de réglage avec le bec verseur par rotation de la molette de réglage correspond à une position dans laquelle le secteur angulaire correspondant du disque 260 est amené en regard du canal de distribution 21b vers le bec verseur 11.

Afin de permettre une mise en rotation de l'outil rotatif 3, la tête d'accouplement 20 de l'outil rotatif 3 est reliée à un organe d'entraînement 22 monté rotatif dans le couvercle. L'organe d'entraînement 22 se présente sous la forme d'un arbre s'étendant verticalement suivant l'axe X et conçu pour permettre la transmission d'un mouvement de rotation à l'outil rotatif 3, préférentiellement par l'intermédiaire de moyens de démultiplication 23 auxquels l'organe d'entraînement 22 est relié par une première extrémité de couplage 22a. Ces moyens de démultiplication comprennent par exemple un train d'engrenages 230, constitué selon l'exemple illustré de trois engrenages, respectivement 231 à 233, en prise d'une part, avec un pignon 234 monté sur la tête d'accouplement 20 en liaison avec l'outil rotatif 3 et, d'autre part, avec un pignon 235 monté solidaire avec la première extrémité de couplage 22a de l'organe d'entraînement 22 avec les moyens de démultiplication 23.

Selon l'invention, l'organe d'entraînement 22, ainsi relié mécaniquement à l'outil rotatif 3, agit sur ce dernier par l'intermédiaire d'un dispositif de déclenchement à accumulation d'énergie potentielle 24, qui comprend avantageusement des moyens élastiques 240 propres à stocker de l'énergie potentielle, lors d'une phase d'armement du dispositif de déclenchement à accumulation d'énergie potentielle, et à la restituer sous forme d'énergie mécanique à l'organe d'entraînement 22 pour entraîner l'outil rotatif 3 en rotation, lors d'une phase de déclenchement du dispositif de déclenchement à accumulation d'énergie potentielle.

Le dispositif de déclenchement à accumulation d'énergie potentielle 24 comprend un organe d'armement 241, permettant de mettre en oeuvre la phase d'armement, au cours de laquelle les moyens élastiques 240 sont contraints pour stocker de l'énergie potentielle, et un organe de commande manuelle 242, pour engendrer la phase de déclenchement, au cours de laquelle les moyens élastiques précédemment armés sont libérés, permettant la transmission du mouvement de rotation à l'outil rotatif 3.

Plus précisément, l'organe d'armement 241 comporte une première 243 et une deuxième 244 parties coaxiales montées mobiles en rotation l'une par rapport à l'autre, selon l'axe X. La première partie, de forme sensiblement cylindrique de révolution d'axe X, forme une molette de manoeuvre 243 montée mobile en rotation d'axe X dans une seule direction, correspondant à la direction d'armement. En effet, la molette de manoeuvre 243 est pourvue au niveau de sa partie inférieure d'au moins un et avantageusement plusieurs secteurs dentés 246, destinés à coopérer avec une roue dentée fixe 247 montée adjacente pour autoriser la rotation de la molette de manoeuvre 243 dans la seule direction d'armement et empêcher sa rotation dans la direction opposée.

La deuxième partie de l'organe d'armement comprend une platine 244 montée à l'intérieur de la molette de manoeuvre 243 et venant en prise avec l'organe d'entraînement 22. Autrement dit, l'organe d'entraînement 22 est couplé en rotation avec la platine 244. Cette dernière délimite en outre avec une seconde platine 244' un logement interne dans lequel sont montés les moyens élastiques 240 du dispositif de déclenchement à accumulation d'énergie potentielle. Ces moyens élastiques 240 sont avantageusement constitués d'un ressort spirale 245 disposé coaxialement à l'axe X dans le logement interne, avec au moins une lame enroulée en une pluralité de spires, parmi lesquelles spires, à une première extrémité, une spire interne est montée solidaire à la platine 244, et, à une deuxième extrémité opposée, une spire externe est montée solidaire d'une paroi interne de la molette de manoeuvre 243.

En outre, l'organe d'entraînement 22 comprend des moyens d'accouplement débrayables 220 propres à bloquer en rotation l'organe d'entraînement 22. Ces moyens d'accouplement débrayables 220 comprennent des moyens d'accouplement portés par l'organe d'entraînement 22, adaptés pour coopérer avec des moyens complémentaires portés par une bague 248 montée fixe de couplage avec l'organe d'entraînement, pour bloquer en rotation l'organe d'entraînement dans la bague 248, et permettant un déplacement axial de l'organe d'entraînement 22 entre des positions de blocage et de libération dans laquelle les moyens d'accouplement sont débrayés des moyens complémentaires. A noter que les moyens d'accouplement débrayables 220 coopèrent avec des moyens de rappel élastiques (non représentés) de l'organe d'entraînement 22 dans sa position de blocage. Ces moyens de rappel élastique sont par exemple agencés au niveau de l'extrémité de couplage 22a de l'organe d'entraînement 22 avec le pignon 235 des moyens de démultiplication 23. Selon l'exemple illustré, l'extrémité de couplage 22a comprend une portion d'arbre creux dans laquelle vient se loger un arbre 235a portant le pignon 235, et des ergots 22b faisant saillie axiale à l'extérieur de l'organe d'entraînement 22 en périphérie de l'extrémité de couplage 22a, destinés à venir en prise dans des rainures 235b correspondantes du pignon 235 pour assurer le couplage en rotation de l'organe d'entraînement avec le pignon 235 et partant, avec l'organe rotatif 3 via les moyens de démultiplication 23. Selon cet exemple, les moyens de rappel élastique de l'organe d'entraînement 22 dans sa position de blocage peuvent comprendre un ressort monté dans la portion d'arbre creux dans laquelle vient s'engager l'arbre 235a portant le pignon 235 des moyens de démultiplication 23.

Selon l'exemple illustré, les moyens d'accouplement débrayables 220 de l'organe d'entraînement 22 comprennent une denture d'accouplement 221 agencée en périphérie de l'organe d'entraînement 22, sensiblement à proximité de la première extrémité de couplage 22a, adaptée pour coopérer avec une denture complémentaire (non représentée) pour bloquer en rotation l'organe d'entraînement par rapport au couvercle. La denture complémentaire est formée sur la face interne d'une bague 248 de couplage avec l'organe d'entraînement 22, par exemple portée par un carter 249 des moyens de démultiplication 23, dans laquelle l'organe d'entraînement 22 est déplaçable axialement entre une position active de blocage dans laquelle la denture d'accouplement 221 est engagée dans la denture complémentaire pour le blocage en rotation de l'organe d'entraînement 22 et une position de libération dans laquelle la denture d'accouplement 221 est débrayée de la denture complémentaire, permettant de libérer l'organe d'entraînement 22 en rotation et partant, de libérer les moyens élastiques lors de la phase de déclenchement du dispositif de déclenchement à accumulation d'énergie potentielle, comme il va être décrit plus en détail.

Le déplacement axial de l'organe d'entraînement 22 est permis par l'organe de commande manuelle 242 du dispositif de déclenchement à accumulation d'énergie potentielle 24, monté en liaison avec une seconde extrémité 22c de l'organe d'entraînement 22, opposée à sa première extrémité de couplage 22a. Selon l'exemple illustré, l'organe de commande manuelle 242 est constitué par un bouton poussoir 250 monté mobile axialement sur le dessus du couvercle 2, au travers d'une lumière 251 ménagée dans la mollette de manoeuvre 243, en regard de laquelle débouche la seconde extrémité 22c de l'organe d'entraînement 22.

Le fonctionnement de l'appareil est alors le suivant. L'armement du ressort spirale 245 s'effectue en tournant avec une main la molette de manoeuvre 243, en maintenant l'appareil de l'autre main. La rotation unidirectionnelle de la molette de manoeuvre 243 dans la direction d'armement, par exemple dans le sens des aiguilles d'une montre, permet de charger le ressort spirale 245 en énergie potentielle, tandis que l'organe d'entraînement 22 est bloqué en rotation par l'intermédiaire des moyens d'accouplement débrayables 220, lui permettant ainsi d'exercer sur le dispositif de déclenchement à accumulation d'énergie 24, via le couplage avec la platine 244, une action antagoniste à celle des moyens élastiques constitués par le ressort spirale 245. La molette de manoeuvre 243 permet avantageusement de régler la quantité d'énergie stockée par les moyens élastiques 245 en fonction de la rotation appliquée à la mollette de manoeuvre 243, qui va venir plus ou moins charger les moyens élastiques, et constitue ainsi un moyen simple de réglage de la vitesse d'émulsion. Autrement dit, le dispositif de déclenchement à accumulation d'énergie potentiel 24 comprend, via la molette de manoeuvre 243 coopérant avec la roue dentée fixe 247, un moyen de chargement incrémental des moyens élastiques 240, permettant avantageusement d'adapter la vitesse d'émulsion souhaitée.

Lors de la phase de déclenchement pour la mise en rotation de l'outil rotatif 3, un appui sur le bouton poussoir 250 entraîne un déplacement axial vers le bas de l'organe d'entraînement 22, ce qui permet de débrayer les moyens d'accouplement débrayables 220 et ainsi de libérer les moyens élastiques 245 précédemment chargés lors de la phase d'armement. L'action exercée sur le bouton poussoir tend donc à provoquer un déroulement brusque du ressort spirale 245, entraînant en rotation l'arbre d'entrainement 22, qui transmet ce mouvement de rotation à l'outil rotatif 3 via les moyens de démultiplication 23.

## Revendications

1. Appareil pour émulsionner une préparation alimentaire fluide comprenant un récipient (1) équipé d'un couvercle amovible (2) comprenant un outil rotatif (3) plongeant dans le récipient (1) pour émulsionner la préparation et un dispositif d'actionnement mécanique pour l'entraînement en rotation de l'outil rotatif, le dispositif d'actionnement mécanique comprenant un organe d'entraînement (22) relié mécaniquement à l'outil rotatif (3) et qui agit sur l'outil rotatif (3) par l'intermédiaire d'un dispositif de déclenchement à accumulation d'énergie potentielle (24) comprenant des moyens élastiques (240) propres à stocker de l'énergie potentielle, lors d'une phase d'armement du dispositif de déclenchement à accumulation d'énergie potentielle, et à la restituer à l'organe d'entraînement (22) pour entraîner l'outil rotatif (3) en rotation, lors d'une phase de déclenchement du dispositif de déclenchement à accumulation d'énergie potentielle, ledit appareil étant **caractérisé en ce que** le récipient est muni d'un bec verseur (11) et **en ce que** le couvercle comprend une partie inférieure (21) par laquelle il est monté sur le récipient et dans laquelle est ménagé un canal de distribution (21b) venant en regard du bec verseur lorsque le couvercle est monté sur le récipient, le couvercle comportant un disque (260) monté mobile à rotation sous la partie inférieure (21) du couvercle de sorte à s'interposer entre un volume sous-jacent du récipient et ledit canal de distribution (21b), ledit disque comprenant des secteurs angulaires (260a, 260b, 260c) aptes à être amenés respectivement en regard dudit canal de distribution par la rotation dudit disque pour réguler le débit de versement vers ledit bec verseur suivant au moins trois positions respectivement ouverte, filtrée et fermée, ledit couvercle comportant une molette de réglage (270) du disque dans l'une desdites trois positions.

2. Appareil selon la revendication 1, **caractérisé en ce que** le bec verseur (11) présente une ouverture (5) débouchant à l'intérieur du récipient et la partie inférieure (21) du couvercle présente une portion cylindrique engagée à l'intérieur du récipient à travers laquelle est ménagée une encoche périphérique radiale s'étendant en regard de ladite ouverture formant ledit canal de distribution (21b).

3. Appareil selon la revendication 1 ou 2, **caractérisé en ce que** le disque (260) comprend un premier secteur angulaire (260a) constitué d'une échancrure formant un secteur complètement ajouré apte à autoriser un débit de versement maximal vers le bec verseur, un deuxième secteur angulaire (260b), constitué d'une partie pleine régulièrement trouée du disque, formant un secteur partiellement ajouré, apte à autoriser un débit de versement inférieur par rapport au débit de versement maximal et un troisième secteur angulaire (260c) constitué d'une partie pleine du disque, formant un secteur plein, apte à obturer le passage vers le bec verseur.

4. Appareil selon l'une quelconque des revendications précédentes, **caractérisé en ce que** le dispositif de déclenchement à accumulation d'énergie potentielle (24) comprend un moyen (243, 247) de chargement incrémental des moyens élastiques (240).

5. Appareil selon l'une quelconque des revendications précédentes, **caractérisé en ce que** l'organe d'entraînement (22) comprend des moyens d'accouplement débrayables (220) propres à bloquer en rotation l'organe d'entraînement (22).

6. Appareil selon la revendication 5, **caractérisé en ce que** l'organe d'entraînement (22) est déplaçable axialement entre sa position de blocage et une position de libération dans laquelle les moyens d'accouplement débrayables (220) sont débrayés.

7. Appareil selon l'une quelconque des revendications 4 à 6, **caractérisé en ce que** le dispositif de déclenchement à accumulation d'énergie potentielle (24) comprend un organe de commande manuelle (242) pour engendrer la phase de déclenchement, l'organe de commande manuelle étant monté en liaison avec une extrémité de l'organe d'entraînement (22), de sorte qu'une action exercée sur l'organe de commande manuelle est apte à débrayer les moyens d'accouplement débrayables de l'organe d'entraînement provoquant la libération des moyens élastiques.

8. Appareil selon l'une quelconque des revendications précédentes, **caractérisé en ce que** le dispositif de déclenchement à accumulation d'énergie potentielle (24) comprend un organe d'armement (241) comprenant une première (243) et une deuxième (244) parties coaxiales montées mobiles en rotation l'une par rapport à l'autre, la deuxième partie (244) étant en prise avec l'organe d'entraînement (22).

9. Appareil selon la revendication 8, **caractérisé en ce que** les moyens élastiques (240) comportent au moins un ressort spirale (245) agencé entre les deux parties de l'organe d'armement, dont les extrémités respectives sont montées fixes sur chacune des parties de l'organe d'armement.

10. Appareil selon l'une quelconque des revendications 8 ou 9, **caractérisé en ce que** les moyens élastiques (240) sont susceptibles d'être armés lors de la phase d'armement par la rotation de la première partie de l'organe d'armement (241) dans une direction d'armement, tandis que la première partie (243) de l'organe d'armement coopère avec une roue dentée fixe (247) pour prévenir la rotation de la première partie de l'organe d'armement dans une direction opposée à la direction d'armement.

11. Appareil selon l'une quelconque des revendications précédentes, **caractérisé en ce que** l'organe d'entraînement (22) comprend une extrémité de couplage (22a) reliée à l'outil rotatif (3) par l'intermédiaire d'un moyen de démultiplication (23).

12. Appareil selon la revendication 11, **caractérisé en ce que** le moyen de démultiplication (23) se compose d'un train d'engrenages (230) en prise d'une part, avec un pignon (234) en liaison avec l'outil rotatif (3) et, d'autre part, avec un pignon (235) en liaison avec l'extrémité de couplage (22a) de l'organe d'entraînement (22).

## Patentansprüche

1. Gerät zum Emulgieren einer flüssigen Nahrungsmittelzubereitung, umfassend einen Behälter (1), der mit einem abnehmbaren Deckel (2) ausgestattet ist, der ein drehbares Werkzeug (3), das in den Behälter (1) eintaucht, um die Zubereitung zu emulgieren, und eine mechanische Betätigungsvorrichtung für den Drehantrieb des drehbaren Werkzeugs umfasst, wobei die mechanische Betätigungsvorrichtung ein Antriebselement (22) umfasst, das mechanisch mit dem drehbaren Werkzeug (3) verbunden ist, und das über eine Auslösevorrichtung mit potenziellem Energiespeicher (24), umfassend elastische Mittel (240), die geeignet sind, während einer Spannphase der Auslösevorrichtung mit potenziellem Energiespeicher potenzielle Energie zu speichern, und sie während einer Auslösephase der Auslösevorrichtung mit potenziellem Energiespeicher wieder an das Antriebselement (22) abzugeben, auf das drehbare Werkzeug (3) wirkt, um das drehbare Werkzeug (3) in Drehung anzutreiben, wobei das Gerät **dadurch gekennzeichnet ist, dass** der Behälter mit einer Ausgusstülle (11) versehen ist, und dadurch, dass der Deckel einen unteren Abschnitt (21) umfasst, mittels dessen er auf den Behälter montiert ist und in dem ein Verteilkanal (21b) vorgesehen ist, der der Ausgusstülle gegenüberliegt, wenn der Deckel auf den Behälter montiert ist, wobei der Deckel eine Scheibe (260) umfasst, die drehbeweglich unter dem unteren Abschnitt (21) des Deckels montiert ist, derart, dass sie zwischen ein darunter angrenzendes Volumen des Behälters und den Verteilkanal (21b) tritt, wobei die Scheibe Winkelsektoren (260a, 260b, 260c) umfasst, die geeignet sind, mittels der Drehung der Scheibe jeweils gegenüber von dem Verteilkanal angeordnet zu werden, um die Ausgussmenge zu der Ausgusstülle gemäß mindestens drei Positionen, respektive Offen, Gefiltert und Geschlossen, zu regulieren, wobei der Deckel ein Stellrad (270) der Scheibe in einer der drei Positionen umfasst.

2. Gerät nach Anspruch 1, **dadurch gekennzeichnet, dass** die Ausgusstülle (11) eine Öffnung (5) aufweist, die ins Innere des Behälters mündet und der untere Abschnitt (21) des Deckels einen zylindrischen Abschnitt aufweist, der ins Innere des Behälters eingesetzt ist, durch den hindurch eine radiale Umfangsnut vorgesehen ist, die sich gegenüber von der Öffnung erstreckt, die den Verteilkanal (21b) formt.

3. Gerät nach Anspruch 1 oder 2, **dadurch gekennzeichnet, dass** die Scheibe (260) einen ersten Winkelsektor (260a) umfasst, der aus einer Ausnehmung gebildet ist, die einen vollständig durchbrochenen Sektor formt, der geeignet ist, eine maximale Ausgussmenge zu der Ausgusstülle zu erlauben, einen zweiten Winkelsektor (260b), der aus einem massiven Abschnitt der Scheibe gebildet ist, der in regelmäßigen Abständen gelocht ist, der einen teilweise durchbrochenen Sektor formt, der geeignet ist, eine geringere Ausgussmenge in Bezug auf die maximale Ausgussmenge zu erlauben, und einen dritten Winkelsektor (260c), der aus einem massiven Abschnitt der Scheibe gebildet ist, der einen massiven Sektor formt, der geeignet ist, den Durchgang zu der Ausgusstülle zu verschließen.

4. Gerät nach einem der vorhergehenden Ansprüche, **dadurch gekennzeichnet, dass** die Auslösevorrichtung mit potenziellem Energiespeicher (24) ein Mittel (243, 247) zum inkrementellen Laden der elastischen Mittel (240) umfasst.

5. Gerät nach einem der vorhergehenden Ansprüche, **dadurch gekennzeichnet, dass** das Antriebselement (22) auskuppelbare Kopplungsmittel (220) umfasst, die geeignet sind, das Antriebselement (22) drehfest zu blockieren.

6. Gerät nach Anspruch 5, **dadurch gekennzeichnet, dass** das Antriebselement (22) axial verschiebbar ist zwischen seiner Blockierungsposition und einer Freigabeposition, in der die auskuppelbaren Kopplungsmittel (220) ausgekuppelt sind.

7. Gerät nach einem der Ansprüche 4 bis 6, **dadurch gekennzeichnet, dass** die Auslösevorrichtung mit potenziellem Energiespeicher (24) ein manuelles Steuerelement (242) umfasst, um die Auslösephase zu verursachen, wobei das manuelle Steuerelement in Verbindung mit einem Ende des Antriebselements (22) montiert ist, derart, dass eine auf das manuelle Steuerelement ausgeübte Betätigung geeignet ist, die auskuppelbaren Kopplungsmittel des Antriebselements auszukuppeln, was die Freigabe der elastischen Mittel veranlasst.

8. Gerät nach einem der vorhergehenden Ansprüche, **dadurch gekennzeichnet, dass** die Auslösevorrichtung mit potenziellem Energiespeicher (24) ein Spannelement (241) umfasst, das einen ersten (243) und einen zweiten (244) koaxialen Abschnitt umfasst, die in Bezug aufeinander drehbeweglich montiert sind, wobei der zweite Abschnitt (244) in das Antriebselement (22) eingreift.

9. Gerät nach Anspruch 8, **dadurch gekennzeichnet, dass** die elastischen Mittel (240) mindestens eine Spiralfeder (245) umfassen, die zwischen den zwei Abschnitten des Spannelements angeordnet ist, deren jeweilige Enden auf jedem Abschnitt des Spannelements fest montiert sind.

10. Gerät nach einem der Ansprüche 8 oder 9, **dadurch gekennzeichnet, dass** die elastischen Mittel (240) geeignet sind, während der Spannphase mittels der Drehung des ersten Abschnitts des Spannelements (241) in einer Spannrichtung gespannt zu werden, während der erste Abschnitt (234) des Spannelements mit einem festen Zahnrad (247) zusammenwirkt, um die Drehung des ersten Abschnitts des Spannelements in eine der Spannrichtung gegenüberliegenden Richtung zu verhindern.

11. Gerät nach einem der vorhergehenden Ansprüche, **dadurch gekennzeichnet, dass** das Antriebselement (22) ein Kopplungsende (22a) umfasst, das mit dem Drehwerkzeug (3) über ein Übersetzungsmittel (23) verbunden ist.

12. Gerät nach Anspruch 11, **dadurch gekennzeichnet, dass** das Übersetzungsmittel (23) sich zusammensetzt aus einem Getriebe (230), das zum einen in ein Ritzel (234) eingreift, das mit dem Drehwerkzeug (3) verbunden ist, und zum anderen in ein Ritzel (235), das mit dem Kopplungsende (22a) des Antriebselements (22) verbunden ist.

## Claims

1. An apparatus to emulsify a fluid food preparation comprising a container (1) provided with a removable lid (2) having a rotary tool (3) extending into the container (1) to emulsify the preparation and a mechanical driving device intended to rotate of the rotary tool, the mechanical driving device comprising a driving member (22) mechanically connected to the rotary tool (3) and that operates the rotary tool (3) through a accumulated potential energy releasing device (24) comprising spring means (240) intended to store potential energy, during a loading phase of the accumulated potential energy releasing device, and to release it to the driving member (22) in order to rotate the rotary tool (3), during a releasing phase of the accumulated potential energy releasing device, said apparatus being **characterized in that** the container is provided with a spout (11) and **in that** the lid comprises a lower part (21) by which it is mounted on the container and within which is arranged a delivery channel (21b) facing to the spout when the lid is mounted on the container, the lid including a disc (260) movably mounted for rotation under the lower part (21) of the lid in order to interpose it between an underlying volume of the container and said delivery channel (21b), said disc comprising angular sectors (260a, 260b, 260c) intended to be respectively brought facing to said delivery channel by the rotation of said disc to control the pouring flow towards said spout according to at least three, respectively opened, filtered and closed positions, said lid including a serrated roller (270) for adjusting the disc in one of said three positions.

2. The apparatus according to claim 1, **characterized in that** the spout (11) has an opening (5) emerging inside the container and the lower part (21) of the lid has a cylindrical portion engaged inside the container through which is arranged a radial peripheral notch that extend facing to said opening forming said delivery channel (21b).

3. The apparatus according to claim 1 or 2, **characterized in that** the disc (260) comprises a first angular sector (260a) constituted by a notch forming a totally openwork sector intended to allow a maximum pouring flow towards the spout, a second angular sector (260b), constituted by a regularly perforated solid part of the disc, forming a partially openwork sector, intended to allow a lower pouring flow relatively to the maximum pouring flow and a third angular sector (260c) constituted by a solid part of the disc, forming a solid sector, intended to seal the passage towards the spout.

4. The apparatus according to any of preceding claims, **characterized in that** the accumulated potential energy releasing device (24) comprises a means (243, 247) intended to incrementally loads the spring means (240).

5. The apparatus according to any of preceding claims, **characterized in that** the driving member (22) comprises releasable coupling means (220) intended to rotationally block the driving member (22).

6. The apparatus according to claim 5, **characterized in that** the driving member (22) is axially movable between its blocking position and a releasing position in which releasable coupling means (220) are released.

7. The apparatus according to any of claims 4 to 6, **characterized in that** the accumulated potential energy releasing device (24) comprises a manual control member (242) intended to generate the releasing phase, the manual control member being mounted in connection with an end of the driving member (22), so that an action exerted on the manual control member is ready to release the releasable coupling means of the driving member causing the release of the spring means.

8. The apparatus according to any of preceding claims, **characterized in that** the accumulated potential energy releasing device (24) comprises a loading member (241) comprising a first (243) and a second (244) coaxial parts movably mounted for rotation the one to the other, the second part (244) being engaged with the driving member (22).

9. The apparatus according to claim 8, **characterized in that** the spring means (240) comprise at least a spiral spring (245) arranged between the two parts of the loading member, whose respective ends are mounted fixedly on each of the loading member parts.

10. The apparatus according to any of claims 8 or 9, **characterized in that** the spring means (240) are likely to be armed during the loading phase by the rotation of the first part of the loading member (241) in an loading direction, while the first part (243) of the loading member cooperates with a fixed toothed wheel (247) to prevent the rotation of the first part of the loading member in a direction opposed to the loading direction.

11. The apparatus according to any of preceding claims, **characterized in that** the driving member (22) comprises a coupling end (22a) connected to the rotary tool (3) through a reducing means (23).

12. The apparatus according to claim 11, **characterized in that** the reducing means (23) is constituted by a gearbox (230) engaged, on the one hand, by a pinion (234) in connection with the rotary tool (3) and, on the other hand, by a pinion (235) in connection with the coupling end (22a) of the driving member (22).
